# EUROPÄISCHE PATENTSCHRIFT

(11) **EP 0 992 383 B1**
(45) Veröffentlichungstag und Bekanntmachung des Hinweises auf die Patenterteilung: **09.08.2006**
(21) Anmeldenummer: 99118528.1
(22) Anmeldetag: 18.09.1999
(51) Int. Cl.: B60J 5/04

(54) **Türsystem für Nutzfahrzeuge**
Door system for utility vehicles
Système de porte pour véhicules utilitaires

(30) Priorität: 10.10.1998 DE 29818161 U
(43) Veröffentlichungstag der Anmeldung: 12.04.2000
(73) Patentinhaber: Schneider Fahrkomfort GmbH, 68167 Mannheim (DE)
(72) Erfinder: Schneider, Boris Sebastian Heinrich, 69514 Laudenbach (DE)
(74) Vertreter: Thews, Karl

(56) Entgegenhaltungen:
- DE-A- 2 060 371
- DE-U- 7 701 184
- DE-U- 8 617 521

## Beschreibung

Die Erfindung betrifft ein Türsystem für Nutzfahrzeuge, nämlich Gabelstapler, Schlepper, Baumaschinen, Landmaschinen oder Kommunalfahrzeuge mit einem das Fahrerschutzdach bildenden Rahmen, wobei an einer Seite des Fahrerschutzdaches eine an Scharnieren angelenkte Tür vorgesehen ist.

Bei solchen Fahrzeugen ist für den Ein- und Ausstieg an der Seite des Fahrerschutzdaches eine Tür eingesetzt, die insbesondere als Stahltüre ausgebildet ist und eine Stahlplatte aufweist, an der Flacheisen und Winkel sowie Kanäle und das Schließ- und Scharniersystem aufgeschweißt sind. Der wesentliche Nachteil dieser bekannten Ausführungsform besteht darin, daß hohe Fertigungskosten und auch Materialkosten gegeben sind.

Der Erfindung liegt die Aufgabe zugrunde, ein derartiges Türsystem vorzuschlagen, das aus einfachen Bauteilen zusammengesetzt leicht montiert werden kann.

Diese Aufgabe wird nach der Erfindung dadurch gelöst, daß die Tür einen Türeinfassungsrahmen als T-Profil aufweist, wobei an dem Querschenkel des T-Profils ein Einzugsprofil aufgesetzt ist, an dem eine Türnutzverkleidung mit Scheiben und/oder Abdeckplatten eingesetzt ist.

Eine vorteilhafte Ausführungsform besteht darin, daß an dem Querschenkel des T-Profils Scharnierbefestigungen für Scharniere zur Verbindung mit dem Rahmen des Fahrerschutzdaches angebracht sind.

Weiterhin wird vorgeschlagen, daß an dem Türeinfassungsrahmen metallische Querverstrebungen angebracht sind.

Es ist weiterhin vorteilhaft, daß an der Innenseite des Querschenkels des T-Profils gegen den Rahmen des Fahrerschutzdaches ein Kantenschutz-Dichtprofil vorgesehen ist.

Die Erfindung wird in der nachfolgenden Beschreibung anhand eines in den Zeichnungen dargestellten Ausführungsbeispiels näher erläutert.

Es zeigen,

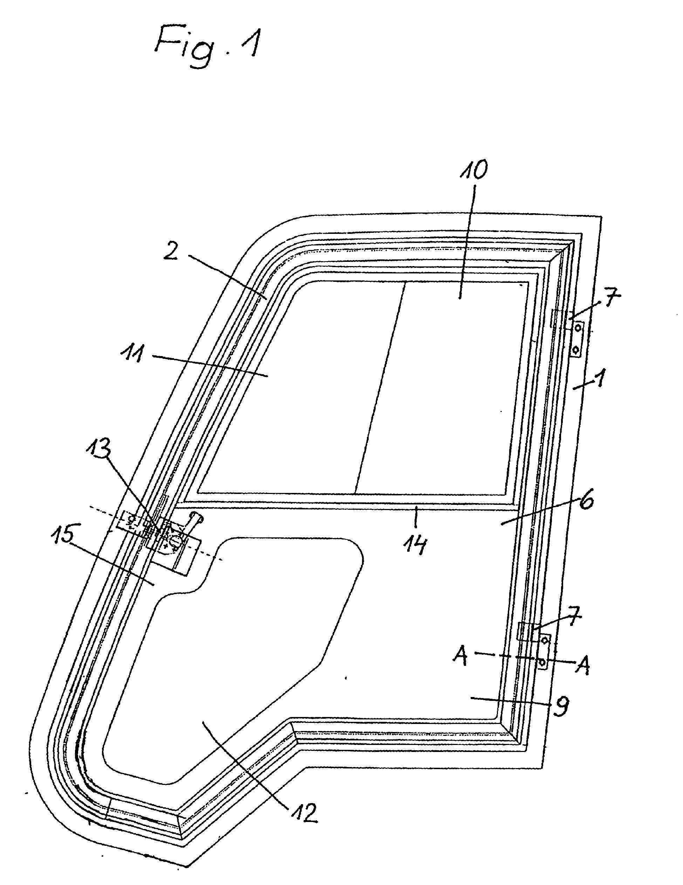

- Fig. 1: eine Ansicht des Türsystems zusammen mit dem Rahmen des Fahrerschutzdaches,

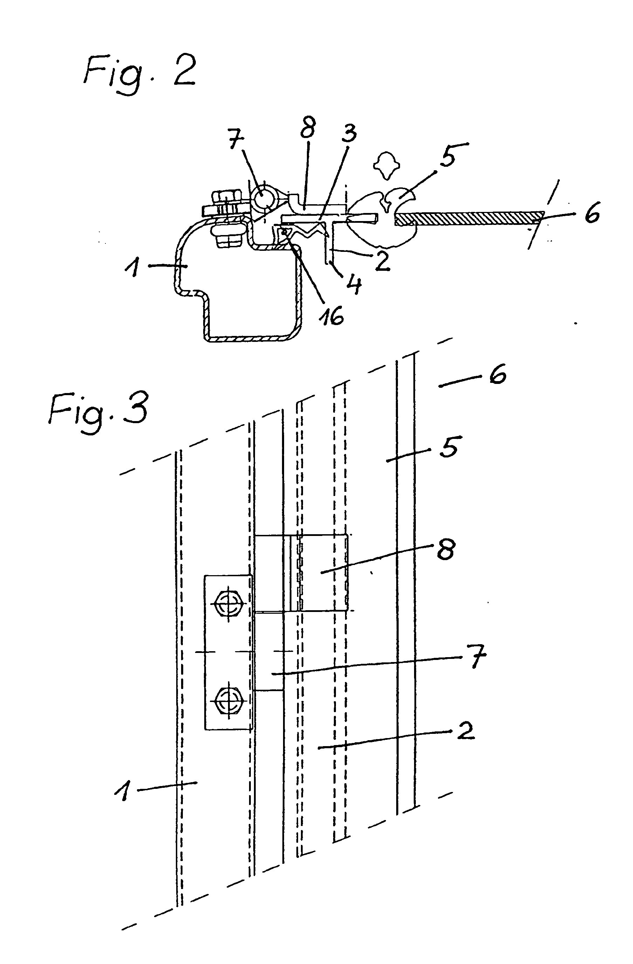

- Fig. 2: einen Schnitt nach der Linie A-A in Fig. 1 und
- Fig. 3: einen Grundriß von Fig. 2.

Das in den Zeichnungen dargestellte Türsystem zeigt eine links an dem Fahrerschutzdach eines Gabelstaplers angeordnete Tür 15. Diese Tür verschließt die seitliche Öffnung des Rahmens 1 des Fahrerschutzdaches. Die Tür besitzt einen Türeinfassungsrahmen 2 in Form eine T-Profils, wobei der außenliegende Querschenkel 3 in der Türebene liegt. Der nach innen weisende Teil des Querschenkels 3 ist mit einem Einzugsprofil 5 aus Gummi oder Kunststoff versehen und an der anderen Seite dieses Einzugsprofils 5 ist eine Nutzverkleidung eingesetzt. Der andere Schenkel 4 des T-Profils weist nach innen, wobei zwischen dem nach außen gerichteten Teil des Querschenkels 3 und dem Schenkel 4 ein Kantenschutz-Dichtprofil 16 eingesetzt ist. Dieses Dichtprofil 16 dichtet die Tür 15 nach innen hin ab und liegt am Rahmen 1 des Fahrerschutzdaches an.

Die Nutzverkleidung 6 der Tür 15 besitzt beispielsweise eine feste Scheibe 10, ein Schiebefenster 11, eine Fußraumscheibe 12 und eine Kunststoffplatte 9. Als zusätzliches Stabilisierungsmittel kann z.B. eine Querverstrebung 14 angebracht werden.

Die Tür 15 ist mit Hilfe von Scharnieren 7 am Rahmen 1 angelenkt, wobei die Scharniere an einer Scharnierbefestigung 8 angebracht sind, die ihrerseits am Querschenkel 3 des T-Profils außen festgeschweißt ist. Die Scharniere 7 sind weiterhin mit dem Rahmen 1 verschraubt. An der gegenüberliegenden Seite ist die Tür mit Hilfe eines Schlosses 13 am Rahmen 1 verschließbar.

Der besondere Nutzen des neuen Systems besteht darin, daß das beim Stand der Technik verwendete flächige Stahlblech mit Öffnungen ersetzt wird durch einen umlaufenden T- oder Z-Profilrahmen. Solche Profilrahmen haben den Vorteil, daß sie durch Vorgänge wie Biegen und/oder Runden einfach und damit kostensparend umgeformt werden können.

## Patentansprüche

1. Türsystem für Nutzfahrzeuge, nämlich Gabelstapler, Schlepper, Baumaschinen, Landmaschinen oder Kommunalfahrzeuge mit einem das Fahrerschutzdach bildenden Rahmen, wobei an einer Seite des Fahrerschutzdaches eine an Scharnieren angelenkte Tür vorgesehen ist, **dadurch gekennzeichnet, daß** die Tür (15) einen Türeinfassungsrahmen (2) als T-Profil aufweist, wobei an dem Querschenkel (3) des T-Profils ein Einzugsprofil (5) aufgesetzt ist, an dem eine Türnutzverkleidung (6) mit Scheiben (10, 11, 12) und/oder Abdeckplatten (9) eingesetzt ist.

2. Türsystem nach Anspruch 1, **dadurch gekennzeichnet, daß** an dem Querschenkel (3) des T-Profils Scharnierbefestigungen (8) für Scharniere (7) zur Verbindung mit dem Rahmen (1) des Fahrerschutzdaches angebracht sind.

3. Türsystem nach Anspruch 1 und 2, **dadurch gekennzeichnet, daß** an dem Türeinfassungsrahmen (2) metallische Querverstrebungen (14) angebracht sind.

4. Türsystem nach Anspruch 1 bis 3, **dadurch gekennzeichnet, daß** an der Innenseite des Querschenkels des T-Profils gegen den Rahmen (1) des Fahrerschutzdaches ein Kantenschutz-Dichtprofil (16) vorgesehen ist.

## Claims

1. A door system for utility vehicles, specifically forklifts, tractors, construction machines, agricultural machines, or municipal vehicles with a frame forming the driver protection roof, wherein a door is provided on one side of said driver protection roof, which door is pivotably mounted by means of hinges, **characterized in that** said door (15) comprises a doorframe (2) in the form of a T-shaped profile and an insertion profile (5) fixed on the transverse leg (3) of said T-shaped profile, into which a functional door panelling (6) with panes (10, 11, 12) and/or cover plates (9) is inserted.

2. A door system according to claim 1, **characterized in that** hinge retaining elements (8) for hinges (7) are mounted to the transverse leg (3) of the T-shaped profile for making a connection to the frame (1) of the driver protection roof.

3. A door system according to claims 1 and 2, **characterized in that** metallic cross struts (14) are mounted to the doorframe (2).

4. A door system according to claims 1 to 3, **characterized in that** an edge protection sealing profile is provided on the inside of the transverse leg of the T-shaped profile, against the frame (1) of the driver protection roof.

## Revendications

1. Système de porte pour véhicules utilitaires, c'est-à-dire des chariots élévateurs à fourche, des tracteurs, des engins de chantier, des machines agricoles ou des véhicules urbains avec un châssis formant le toit de protection du conducteur, une porte montée sur charnières étant prévue sur un côté du toit de protection du conducteur, **caractérisé en ce que** la porte (15) présente un châssis de bâti (2) en profilé en T, un profilé d'enfoncement (5) étant placé sur la traverse (3) du profilé en T, sur lequel profilé d'enfoncement un habillage utile de porte (6) avec vitres (10, 11, 12) et/ou plaques de couverture (9) est placé.

2. Système de porte selon la revendication 1, **caractérisé en ce que** sur la traverse (3) du profilé en T, des fixations (8) pour charnières (7) sont posées pour l'assemblage avec le châssis (1) du toit de protection du conducteur.

3. Système de porte selon la revendication 1 ou 2, **caractérisé en ce que** des entretoises transversales métalliques (14) sont posées sur le châssis de bâti (2).

4. Système de porte selon la revendication 1 à 3, **caractérisé en ce qu'**un profilé étanche de protection des bords (16) est prévu sur le côté intérieur de la traverse du profilé en T contre le châssis (1) du toit de protection du conducteur.
